# EUROPÄISCHE PATENTSCHRIFT

(11) **EP 0 461 344 B1**
(45) Veröffentlichungstag und Bekanntmachung des Hinweises auf die Patenterteilung: **22.09.1993**
(21) Anmeldenummer: 91103240.7
(22) Anmeldetag: 04.03.1991
(51) Int. Cl.: F01M 11/04, B03C 1/28

(54) **Ablassschraube**
Drain plug
Bouchon de vidange

(30) Priorität: 15.06.1990 DE 4019223
(43) Veröffentlichungstag der Anmeldung: 18.12.1991
(73) Patentinhaber: Dr.Ing.h.c. F. Porsche Aktiengesellschaft, 70435 Stuttgart (DE)
(72) Erfinder: Henkel, Achim, W-7140 Ludwigsburg 12 (DE)

(56) Entgegenhaltungen:
- DE-A- 2 918 204
- DE-A- 3 813 684
- FR-A- 693 548
- FR-A- 2 174 671

## Beschreibung

Die Erfindung betrifft eine Ablaßschraube gemäß dem Oberbegriff des Patentanspruches 1. In der FR-A- 2174 671 ist eine solche Ablaßschraube offenbart, in der eine Ausnehmung ausgebildet ist, in die ein Dauermagnet mit Kunstharzbindung eingesetzt ist.
Die DE-A 31 48 032 offenbart eine Ölablaßschraube mit einem dauermagnetischen Fangmagneten, der in eine Haltekappe eingesetzt ist, die am Gewindeschaft der Schraube gehalten wird.
Diese bekannten Schrauben dienen dem Ausscheiden von metallischen Spänen aus dem Ölkreislauf von Maschinen. Nachteilig ist, daß sie einen mehrteiligen Aufbau besitzen und daher aufwendig zu fertigen sind und daß sie als Vielstoffbauteile einem Recycling nur schlecht zugänglich sind.

Der Erfindung liegt die Aufgabe zugrunde, eine Ablaßschraube zu schaffen, die metallische Partikel aus einem Flüssigkeitskreislauf einer Maschine abscheidet und dabei von einfachem Aufbau und kostengünstig herstellbar ist.

Die Lösung dieser Aufgabe gelingt mit den kennzeichnenden Merkmalen des Patentanspruches 1. Vorteilhafte Ausgestaltungen sind in den Unteransprüchen benannt.

Die Verwendung eines mit einem magnetisierbaren Werkstoff gefüllten Kunststoffes als Werkstoff für die Ablaßschraube gestattet eine einstückige Herstellung in einem Arbeitsgang. Somit entfällt ein sonst notwendiger Zusammenbau.
Weiterhin sind solche Schrauben leichtgewichtig und erlauben eine große gestalterische Freiheit, die üblicherweise bereits durch die verwendeten Permanentmagneten eingeschränkt ist.
Die magnetische Kraft der Schraube ist durch die Auswahl und die Menge des als Füllstoff verwendeten magnetisierbaren Werkstoffes den jeweiligen Anforderungen anpaßbar.

Ebenso ist eine große Anzahl verschiedener thermoplastischer oder duroplastischer Kunststoffe als Matrix für die Aufnahme des magetisierbaren Werkstoffes verwendbar. Dadurch kann die Schraube den Betriebsbedingungen angepaßt werden. Diese Bedingungen sind im wesentlichen gegeben durch die Art und die Temperatur der Flüssigkeit, aus der die metallischen Partikel abgeschieden werden.
Der Kopfabschnitt kann in analoger Weise zu bekannten Schrauben als Außen- oder Innensechskant gestaltet werden, kann jedoch auch als deutliches Unterscheidungsmerkmal zu bekannten, metallischen Schrauben, eine spezielle Gestaltung erhalten.
Ein zwischen dem Kopf- und dem Gewindeabschnitt angeordneter Radialflansch kann auf einer dem Gewindeabschnitt zugewandten Ringfläche eine integrierte Dichtung tragen, die in einfacher Weise in Form von Dichtlippen oder als separat eingelegte Dichtung ausgebildet sein kann.
Die Schraube ist durch eine sich zumindest innerhalb des Gewindeabschnittes erstreckende Ausnehmung hohl gestaltet, was vorteilhaft für das Herstellungsverfahren, das Gewicht und für die Größe der Abscheidefläche ist, auf der die metallischen Partikel abgeschieden werden. Zur Vergrößerung dieser Fläche kann sich die Schraube über den Gewindeabschnitt hinaus erstrecken und/oder sie kann innerhalb der Ausnehmung angeordnete Vorsprünge aufweisen.

Bei der Herstellung sind als Füllstoffe z.B. Barium- oder Strontium-Ferrite verwendbar. Diese Füllstoffe liegen in dem als Granulat verwendeten Kunststoff, z. B. Polyamid oder Polyphenylensulfid PPS, fein verteilt vor. Bei der anschließenden Verarbeitung durch Spritzgießen, Spritzpressen, Thermoplast-Schaumspritzgießen oder artverwandte Herstellverfahren entsteht die endgültige Form der Schraube.
Die höchsten magnetischen Kräfte werden dann erzielt, wenn der Füllstoff bereits bei der Herstellung der Schraube magnetisiert wird. Dabei wird jedes Füllstoffteilchen als Magnet polarisiert und ausgerichet.

Solche Ablaßschrauben sind in allen Maschinen, wie Brennkraftmaschinen, Getrieben, Kompressoren etc. anwendbar, in denen zu Schmier- oder Kühlzwecken eine Flüssigkeit in einem Kreislauf zirkuliert, beispielsweise Öl oder Wasser.
Die Erfindung wird im folgenden anhand von Figuren beispielhaft erläutert.

Es zeigen:

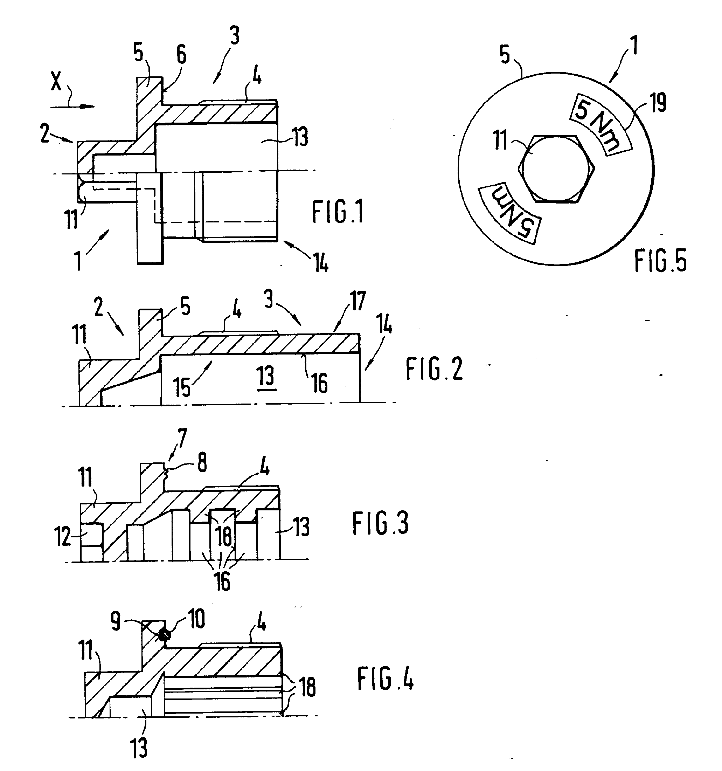

- Fig.1: schematisch eine Ausführungsform der Ablaßschraube im Teilschnitt,
- Fig.2: schematisch eine andere Ausführungsform der Schraube,
- Fig.3: schematisch eine weitere Ausführungsform der Schraube,
- Fig.4: schematisch eine weitere Ausführungsform und
- Fig.5: eine Ansicht aus Pfeilrichtung X gemäß Fig.1.

Eine einstückige Ablaßschraube 1, die zum Ablassen von Öl aus einer nicht gezeigten Maschine, insbesondere einer Brennkraftmaschine dient, weist einen Kopfabschnitt 2 und einen Gewindeabschnitt 3 auf, der ein Außengewinde 4 trägt, mit dem die Ablaßschraube 1, z. B. in eine Ölwanne der Brennkraftmaschine eingesetzt ist.
Zwischen dem Kopfabschnitt 2 und dem Gewindeabschnitt 3 ist ein Radialflansch 5 angeordnet, welcher auf einer dem Gewindeabschnitt 3 zugewandten Ringfläche 6 eine Dichtung 7 trägt.
Diese Dichtung 7 kann in Form von integrierten Dichtlippen 8 oder als ein in eine Nut 9 der Ringfläche 6 eingelegter Dichtring 10 ausgebildet sein.

Der Kopfabschnitt 2 trägt einen Außensechskant 11 zum Ansetzen eines Schraubenschlüssels. In diesem Außensechskant 11 kann auch ein Innensechskant 12 eingeprägt sein.
Innerhalb der Schraube 1 erstreckt sich eine Ausnehmung 13, die an einem Ende 14 der Schraube 11 offen ist. Die innenliegende Oberfläche 15 der Schraube 1 wirkt als Abscheidefläche 16 für metallische Partikel. Zur Vergrößerung dieser Fläche 16 kann die Schraube über das zum Einschrauben erforderliche Maß hinaus mit einer Verlängerung 17 versehen sein und/oder auf der Fläche 16 angeordnete, radiale Vorsprünge 18 aufweisen.
Um Zerstörungen der Schraube 1 beim Einschrauben zu vermeiden, kann auf einer im eingeschraubten Zustand sichtbaren Fläche auf dem Kopfabschnitt 2 eine Beschriftung 19, z.B. "5 Nm" für ein maximal zulässiges Einschraubdrehmoment angegeben sein.

Die Schraube 1 besteht aus einem mit einem magnetisierbaren Werkstoff gefüllten Kunststoff.
Bei der Herstellung wird dieser Kunststoff, z. B. Polyamid PA, gefüllt mit einem magnetisierbaren Werkstoff, z. B. Barium-Ferrit, durch einen Formgebungsprozeß, z. B. Spritzgießen, in die Form einer Schraube gebracht. Vor dem endgültigen Erstarren der Kunststoffschmelze im Spritzgießwerkzeug wird von außen ein Magnetfeld aufgebracht, welches die zu magnetisierenden Teilchen polarisiert.

## Patentansprüche

1. Ablaßschraube bestehend aus einem Kunststoff zum magnetischen Abscheiden von metallischen Partikeln aus einem Flüssigkeitskreislauf einer Maschine, insbesondere einer Brennkraftmaschine, mit einem Gewinde- und einem Kopfabschnitt, **dadurch gekennzeichnet**, daß der Kunststoff einen magnetisierbaren Füllstoff enthält.

2. Schraube nach Anspruch 1, **dadurch gekennzeichnet**, daß der magnetisierbare Werkstoff als Füllstoff in der Matrix des Kunststoffs fein verteilt vorliegt.

3. Schraube nach Anspruch 2, **dadurch gekennzeichnet**, daß zwischen dem Gewindeabschnitt (3) und dem Kopfabschnitt (2) ein Radialflansch (5) angeordnet ist, wobei in einer dem Gewindeabschnitt (3) zugewandten Ringfläche (6) des Radialflansches (5) eine Dichtung (7) integriert ist.

4. Schraube nach einem oder mehreren der vorhergehenden Ansprüche, **dadurch gekennzeichnet**, daß in dem Gewindeabschnitt (3) und/oder dem Kopfabschnitt (2) eine Ausnehmung (13) angeordnet ist, die an dem dem Kopfabschnitt (2) gegenüberliegenden Ende (14) des Gewindeabschnittes (3) offen ist.

5. Schraube nach einem oder mehreren der vorhergehenden Ansprüche, **dadurch gekennzeichnet**, daß sich der Gewindeabschnitt (3) von dem Kopfabschnitt (2) ausgehend über ein auf dem Gewindeabschnitt (3) angeordnetes Gewinde (Außengewinde 4) hinaus erstreckt.

6. Schraube nach den Ansprüchen 4 oder 5, **dadurch gekennzeichnet**, daß auf einer Oberfläche (15) der Ausnehmung (13) radiale Vorsprünge (18) angeordnet sind.

## Claims

1. A drain plug consisting of a plastics material for the magnetic removal of metallic particles from a fluid circuit of a machine, in particular an internal-combustion engine, having a threaded portion and a head portion, **characterized in that** the plastics material contains a magnetizable filler.

2. A plug according to Claim 1, **characterized in that** the magnetisable material is present finely distributed as a filler in the matrix of the plastic material.

3. A plug according to Claim 2, **characterized in that** a radial flange (5) is arranged between the threaded portion (3) and the head portion (2), a seal (7) being incorporated in an annular face (6) of the radial flange (5) facing the threaded portion (3).

4. A plug according to one or more of the preceding Claims, **characterized in** **that** a recess (13), open at the end (14) of the threaded portion (3) opposite the head portion (2), is arranged in the threaded portion (3) and/or the head portion (2).

5. A plug according to one or more of the preceding Claims, **characterized in** **that** the threaded portion (3) extends from the head portion (2) beyond a thread (external thread 4) provided on the threaded portion (3).

6. A plug according to Claims 4 and 5, **characterized in that** radial projections (18) are arranged on a surface (15) of the recess (13).

## Revendications

1. Bouchon de vidange à vis en matière plastique pour la séparation magnétique de particules métalliques contenues dans un circuit de liquide d'une machine, en particulier un moteur à combustion, présentant une partie filetée et une tête, caractérisé en ce que la matière plastique contient une matière de charge magnétisable.

2. Bouchon selon la revendication 1, caractérisé en ce que la matière magnétisable servant de charge est finement répartie dans la matrice de la matière plastique.

3. Bouchon selon la revendication 2, caractérisé en ce qu'entre la partie filetée (3) et la tête (2) est placée une bride radiale (5), une garniture d'étanchéité (5) étant intégrée dans une surface annulaire (6), tournée vers la partie filetée (3), de la bride radiale (5).

4. Bouchon selon une ou plusieurs des revendications précédentes, caractérisé en ce que dans la partie filetée (3) et/ou la tête (2), il est prévu un évidement (13) qui est ouvert à l'extrémité (14), opposée à la tête (2), de la partie filetée (3).

5. Bouchon selon une ou plusieurs des revendications précédentes, caractérisé en ce que la partie filetée (3), partant de la tête (2), s'étend au-delà d'un filetage (filetage extérieur 4) prévu sur la partie filetée (3).

6. Bouchon selon les revendications 4 ou 5, caractérisé en ce que des parties saillantes (18) radiales sont prévues sur une surface (15) de l'évidement (13).
